Europäisches Patentamt

European Patent Office

Office européen des brevets

(11) Publication number: **0 065 414**
**B1**

# (12) EUROPEAN PATENT SPECIFICATION

(45) Date of publication of patent specification: **04.09.85**

(21) Application number: **82302444.3**

(22) Date of filing: **13.05.82**

(51) Int. Cl.⁴: **F 16 B 39/36**

(54) **A nut locking unit.**

(30) Priority: **19.05.81 JP 73066/81 u**

(43) Date of publication of application:
**24.11.82 Bulletin 82/47**

(45) Publication of the grant of the patent:
**04.09.85 Bulletin 85/36**

(84) Designated Contracting States:
**AT BE CH DE FR GB IT LI LU NL SE**

(56) References cited:
**AT-B- 75 788**
**DE-C- 147 124**
**DE-C- 251 758**
**DE-C- 628 200**
**JP-Y-36 012 375**
**US-A-2 537 469**

(73) Proprietor: **HARD-LOCK KOGYO KABUSHIKI
KAISHA**
**17-11, Nagata 2-chome,**
**Jyotoku Osaka (JP)**

(72) Inventor: **Wakabayashi, Katsuhiko**
**17-11, Nagata 2-chome**
**Jyotoku Osaka (JP)**

(74) Representative: **Hartley, David et al**
**c/o Withers & Rogers 4 Dyer's Buildings Holborn**
**London, EC1N 2JT (GB)**

Courier Press, Leamington Spa, England.

**Description**

The present invention relates to a nut locking unit for preventing a nut from loosening under vibration or or any other external causes.

Japanese Utility Model Publication No. 36123/75 device discloses the so-called "double nut system" which, as its name implies, employs two nuts. One of the nuts has a projecting head and the other has a recess adapted to receive the head, thereby securing a union of the two nuts, wherein either the axis of the head or the recess deviates from the axis of a bolt to be fastened. Thus, when the head is inserted in the recess of the other nut, the two nuts are eccentrically met.

A wedge effect is provided by virtue of the eccentric engagement of the head of one nut with the recess of the other nut. It has been found that once the nut has been tightened in this way, the lock lasts virtually permanently. Since the threads in each nut are safe from wearing after repeated use, the locking effect remains effective.

In spite of these advantages the double nut system has disadvantages in that the use of two nuts requires two steps, and becomes troublesome. Also the space occupied by two nuts in axial abutment is such that use of the "double nut system" is restricted to applications wherein sufficient space is available.

One object of the present invention is to avoid the problems mentioned above with respect to the double nut system, and to provide an improved nut locking unit capable of simplifying the fastening procedure and facilitating the locking work.

According to the present invention we propose a nut locking unit comprising a first part in the form of a nut having internal screw threads engageable with the external screw theads of a bolt to be fastened, and a second part, one of the said parts having a projecting head and the other part having a recess whereby the parts engage with each other, either the head or the recess being eccentric with respect to the axis of the bolt, characterised in that the second part is a washer having a bore allowing the bolt to pass through.

Embodiments of the invention will now be described by way of example with reference to the accompanying drawings in which:

Figure 1 is a vertical cross-section through a nut for a unit according to the present invention;

Figure 2 is a bottom view of the nut in Figure 1;

Figure 3 is a vertical cross-section through a washer for use in association with the nut in Figure 1;

Figure 4 is a plan view of the washer of Figure 4;

Figures 5 and 6 are cross-sectional views showing the union of a bolt, fixtures and a nut locking unit according to the present invention;

Figure 7 is a vertical cross-section through a modified nut;

Figure 8 is a bottom view of the nut in Figure 7;

Figure 9 is a vertical cross-section through a modified washer for use in association with the nut of Figure 7;

Figure 10 is a plan view of the washer of Figure 12;

Figure 11 is vertical cross-section through a further modified nut;

Figure 12 is a bottom view of the nut of Figure 11;

Figure 13 is a vertical cross-section through a washer for use in association with the nut of Figure 11; and

Figure 14 is a plan view of the washer of Figure 13.

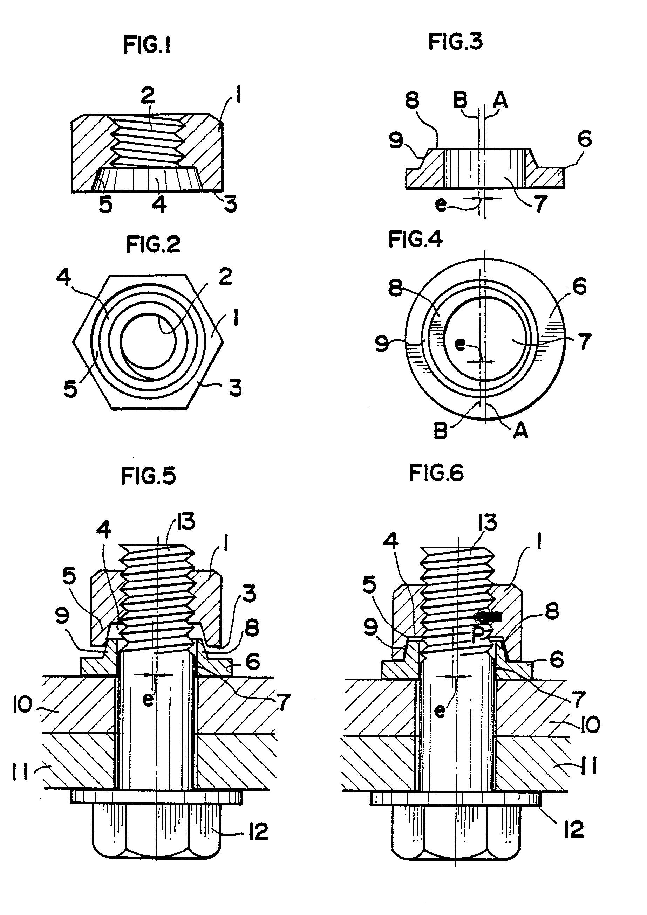

Referring to Figures 1 and 2, a nut 1 has, in its seat face 3, a recess 4 shaped like a truncated cone with a diameter larger than that of a threaded hole 2 and having a tapered inside wall 5. The recess 4 and the threaded hole 2 are made concentric.

Figures 3 and 4 show a washer 6 to be used in association with the nut 1, and having a bore 7 and a tapered outside wall 9, which defines a projecting head 8. The head 8 is designed for inserting in the recess 4 of the nut 1 such that the tapered inside wall 5 mates with the tapered outside wall 9. The tapered outside wall 9 has an axis (B) which deviates slightly from an axis (A) of the bore 7. The eccentricity of the axis (B) with respect to the axis (A) is indicated by (e). The washer 6 can be made of either metal or plastics material.

Figures 5 and 6 show two fixtures 10 and 11 united by a bolt 12, which is locked by the nut 1 and the washer 6. Initially, the washer 6 is placed with a threaded portion 13 of the bolt 12 inserted in the bore 7, and then, the nut 1 is turned around the threaded portion 13 of the bolt 12 until the recess 4 meets the head 8 of the washer 6. In this case, since the axis (B) of the tapered outside wall 9 deviates by (e) from the axis (A) of the bore 7, that is, the axis of the bolt 12, a wedging action occurs between the tapered walls 5 and 9 as the nut 1 advances along the threaded portion 13 of the bolt 12. Figure 6 illustrates (by the arrow) that the wedging is in a direction at right angles to the axis of the bolt 12. This wedging action increases as the nut 1 advances thread by thread, thereby increasing the locking effect upon the nut 1. The eccentricity (e) should not be too large, otherwise the bolt 12 is likely to be deformed, or the head 8 and the recess 4 will fail to meet properly. The amount of deviation (e) must be divided so as to attain the locking effect.

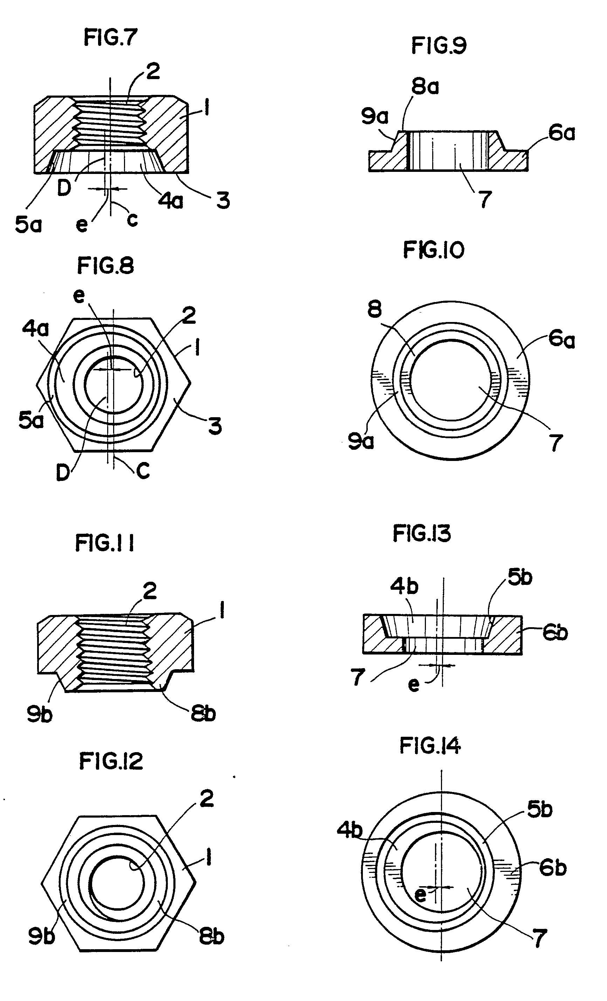

In the embodiment of Figures 7 to 10, the nut 1 has a recess 4a defined by a tapered inside wall 5a, whose axis (D) deviates by (e) from the axis (C) of the threaded hole 2, that is, of a bolt to be fastened. A mating washer 6a has a bore 7 and a projecting head 8a defined by a tapered outside wall 9a. The axis of the tapered outside wall 9a is concentric with that of the bore 7. In this embodiment the same locking effect can be attained.

Another embodiment shown in Figures 11 to 14, has a nut 1 with a projecting head 8b in its seat face, which head 8b is defined by a tapered outside wall 9b. The tapered outside wall 9b and the threaded hole 2 are concentric. The washer 6b (Figure 13) has a bore 7 and a recess 4b defined by a tapered inside wall 5b. The axis of the recess 4b deviates by (e) from that of the bore, that is, of a bolt to be fastened. However, a reverse arrangement is possible, that is, the bore 7 and the recess 4b are made concentric, while the axis of the projecting head 8b deviates by (e) from that of the threaded hole 2, that is, of a bolt to be fastened.

It will be understood that the two nuts in the prior double nut system have been replaced by a combination of a nut and a washer, thereby resulting in a simplified fastening procedure i.e. in the usual way in which a nut is fastened against a washer. The nut locking unit of the invention can be made small and light, particularly when the washer is made of plastic. Nevertheless, the locking effect is advantageously as strong as that achieved by the prior double nut system.

### Claims

1. A nut locking unit comprising a first part in the form of a nut (1) having internal screw threads (2) engageable with the external screw threads (13) of a bolt (12) to be fastened, and a second part (6), one of the said parts having a projecting head (8, 8a, 8b) and the other part having a recess (4, 4a, 4b) whereby the parts engage with each other, either the head or the recess being eccentric (e) with respect to the axis of the bolt, characterised in that the second part is a washer (6) having a bore (7) allowing the bolt to pass through.

2. A nut locking unit according to claim 1, wherein the projecting head (8b) is on the nut (1) and the recess (4b) is on the washer (6).

3. A nut locking unit according to claim 1, wherein the recess (4, 4a) is on the nut (1) and wherein the projecting head (8, 8a) is on the washer (6).

4. A nut locking unit according to any one of claims 1 to 3 wherein the recess (4, 4a, 4b) has a tapered inside wall (5, 5a, 5b) and the projecting head (8, 8a, 8b) has a tapered outside wall (9, 9a, 9b) which walls mate together with the parts in engagement.

### Patentansprüche

1. Gewindemutter mit Sicherung, mit einem ersten Teil in Form einer Mutter (1) mit Innengewinde (2), das mit dem Außengewinde (13) eines zu befestigenden Bolzens (12) in Eingriff gebracht werden kann, und einem zweiten Teil (6), wobei eines der beiden Teile einen vorstehenden Kopf (8, 8a, 8b) und das andere Teil eine Ausnehmung (4, 4a, 4b) aufweist, wodurch die Teile miteinander in Eingriff gebracht werden könen, und wobei entweder der Kopf oder die Ausnehmung gegenüber der Achse des Bolzens exzentrisch (e) sind, dadurch gekennzeichnet, daß der zweite Teil eine Scheibe (6) mit einer Bohrung (7) ist, durch die der Bolzen hindurchtreten kann.

2. Gewindemutter mit Sicherung nach Anspruch 1, wobei der vorstehende Kopf (8b) an der Mutter (1) und die Ausnehmung (4b) an der Scheibe (6) angeordnet ist.

3. Gewindemutter mit Sicherung nach Anspruch 1, wobei die Ausnehmung (4, 4a) an der Mutter (1) und der vorstehende Kopf (8, 8a) an der Scheibe (6) angeordnet ist.

4. Gewindemutter mit Sicherung nach einem der Ansprüche 1 bis 3, wobei die Ausnehmung (4, 4a, 4b) eine sich verjüngende Innenwand (5, 5a, 5b) und der vorstehende Kopf (8, 8a, 8b) eine sich verjüngende Außenwand (9, 9a, 9b) aufweist, wobei die Wände zusammen mit den in Eingriff stehenden Teilen zusammenpassen.

### Revendications

1. Ecrou avec élément de verrouillage comprenant une première partie constituée par un écrou (1) présentant des filets de vis (2) intérieurs s'engageant avec des filets de vis (13) extérieurs d'un boulon (12) à fixer, et une seconde partie (6), l'une desdites parties présentant une tête faisant saillie (8, 8a, 8b) et l'autre partie présentant une cavité (4, 4a, 4b) grâce à quoi les parties s'engagent l'une avec l'autre, soit la tête, soit la cavité étant excentrée (e) par rapport à l'axe du boulon, caractérisé en ce que la seconde partie est une rondelle (6) présentant un alésage (7) permettant le passage à travers elle du boulon.

2. Ecrou à élément de verrouillage selon la revendication 1, dans lequel la tête faisant saillie (8b) est formée sur l'écrou (1) et la cavité (4b) est formée sur la rondelle (6).

3. Ecrou à élément de verrouillage selon la revendication 1, dans lequel la cavité (4, 4a) est formée sur l'écrou (1) et dans lequel la tête faisant saillie (8, 8a) est formée sur la rondelle (6).

4. Ecrou à élément de verrouillage selon l'une quelconque des revendications 1 à 3, dans lequel la cavité (4, 4a, 4b) présente une paroi interne (5, 5a, 5b) allant en se rétrécissant et la tête faisant saillie (8, 8a, 8b) présente une paroi externe (9, 9a, 9b) allant en se rétrécissant, lesquelles parois se correspondent lorsque les parties sont en engagement l'une contre l'autre.

FIG.1

FIG.2

FIG.3

FIG.4

FIG.5

FIG.6

FIG.7

FIG.9

FIG.8

FIG.10

FIG.11

FIG.13

FIG.12

FIG.14